# EUROPÄISCHE PATENTSCHRIFT

(11) **EP 0 704 501 B1**
(45) Veröffentlichungstag und Bekanntmachung des Hinweises auf die Patenterteilung: **19.08.1998**
(21) Anmeldenummer: 95114639.8
(22) Anmeldetag: 18.09.1995
(51) Int. Cl.: C09C 1/24, C01G 49/06

(54) **Hochtransparente, rote Eisenoxidpigmente, Verfahren zu ihrer Herstellung sowie deren Verwendung**
Highly transparent, red iron oxide pigments, process for their preparation and their use
Pigments d'oxyde de fer rouges, très transparents, procédé pour leur préparation et leur utilisation

(30) Priorität: 30.09.1994 DE 4434968
(43) Veröffentlichungstag der Anmeldung: 03.04.1996
(73) Patentinhaber: BAYER AG, 51368 Leverkusen (DE)
(72) Erfinder: Pitzer, Ulrike, Dr., D-47800 Krefeld (DE)

(56) Entgegenhaltungen:
- DE-A- 3 026 686
- DE-A- 3 640 245
- GB-A- 2 271 766
- US-A- 4 348 240

## Beschreibung

Die vorliegende Erfindung betrifft ein Verfahren zur Herstellung roter, transparenter Eisenoxidpigmente mit hoher chemischer Reinheit, so erhältliche Eisenoxidpigmente sowie deren Verwendung zur Einfärbung von Lacken und Kunststoffen.

Eisenoxidpigmente mit einer mittleren Teilchengröße von kleiner 0,1 µm werden als transparente Eisenoxidpigmente bezeichnet, da sie für sichtbares Licht durchlässig sind. Alternativ zur Teilchengröße wird auch häufig die spezifische Oberfläche als Maß für die Größe der Partikel verwendet. Insbesondere bei nadelförmigen Teilchen bietet sich dieses Maß an, um die Angabe von Teilchengrößen in verschiedenen Raumrichtungen zu vermeiden. Dabei sind Pulver mit spezifischen Oberflächen nach BET von mehr als 80 m²/g in der Regel als transparent zu bezeichnen. Hochtransparent sind Pigmente mit spezifischen Oberflächen von mehr als 100 m²/g.

Transparente Eisenoxidpigmente finden vor allem Verwendung bei der Herstellung von Effekt-Autolacken, Holzlasuren und zum Einfärben transparenter Kunststoffe.

Rote, transparente Eisenoxidpigmente werden in der Regel durch Glühung von gelben, transparenten Eisenoxidpigmenten hergestellt. Die Herstellung dieser gelben Vorstufen erfolgt üblicherweise durch Fällung von Eisen(II)-hydroxiden oder -carbonaten im sauren oder alkalischen pH-Bereich und anschließende Oxidation zu Fe(III)-oxidhydroxiden.

Die Fällung von gelbem α-FeOOH im alkalischen pH-Bereich ist in US-A 2 558 303 und US-A 2 558 304 beschrieben.

Die Herstellung unter Alkali-Überschuß führt zwar zu salzarmen und dadurch besser dispergierbaren Produkten, hat aber den Nachteil, daß neben den Eisenhydroxiden zahlreiche andere Hydroxide von Metallionen, die als Verunreinigungen in den technisch eingesetzten Eisensalzlösungen vorliegen, mit ausgefällt werden. Insbesondere ist die Ausfällung von Mn-Verunreinigungen zu nennen. Diese Verunreinigungen verursachen in den durch Glühung aus den gelben Pigmenten gewonnenen Rotpigmenten braunstichige Farbtöne. Außerdem können die Gesamtgehalte an metallischen Verunreinigungen, je nach eingesetztem Rohstoff, so hoch sein, daß diese Pigmente z.B. nicht mehr in Kunststoffverpackungen für Lebensmittel eingesetzt werden können.

Die Herstellung von α-FeOOH-Pigmenten im sauren pH-Bereich hat den Vorteil, daß die Ausfällung von Fremdmetallverunreinigungen vermieden wird, auf der anderen Seite aber den Nachteil, daß die Pigmente selbst nach intensiver Waschung noch stark mit Anionen verunreinigt sind. Da die Herstellung in der Regel aus Eisensulfatlösungen erfolgt, sind hier insbesondere Sulfatverunreinigungen zu nennen. Dies führt sowohl bei den Gelbpigmenten als auch bei den daraus durch Glühung gewonnenen Rotpigmenten zu einer verschlechterten Dispergierbarkeit und damit - bei gleicher eingesetzter Dispergierenergie - zu schlechterer Transparenz im Vergleich zu alkalisch hergestellten Pigmenten.

In US-A 4 785 415 ist ein Verfahren zur Entfernung löslicher Metallkationen von Eisenoxidpigmenten beschrieben. Dabei werden nach einem sauren Fällverfahren hergestellte, transparente, gelbe Eisenoxidpigmente mit einer Lösung gewaschen, die eine Ligandenverbindung enthält, wobei die Leitfähigkeit des Pigmentes nach der Behandlung sehr gering ist, und teilweise anschließend zu roten, transparenten Eisenoxidpigmenten geglüht. Nach diesem Verfahren lassen sich jedoch nicht die im Pigment fest eingebauten Metallverunreinigungen entfernen, die z.B. bei der Herstellung der Pigmente über alkalische Fällverfahren entstehen. Als Ligandenverbindung wird dabei, neben einer Vielzahl anderer Verbindungen, auch Ammoniak genannt. Die beschriebene Nachbehandlung von Pigmenten mit Ammoniak hat jedoch verschiedene Nachteile. So ist z.B. eine Waschung von Filterkuchen mit Ammoniak im großtechnischen Maßstab wegen der Giftigkeit kaum möglich. Außerdem ist bei einer Waschung von Filterkuchen im großtechnischen Maßstab nicht gewährleistet, daß der gesamte Produktquerschnitt in ausreichender Menge und für eine ausreichende Zeit mit der Ligandenverbindung in Berührung kommt, so daß keine gleichmäßige Produktqualität erzielt werden kann.

Weiterhin ist in dem Patent US-A 4 758 415 eine Vorbehandlung von sauer hergestellten Gelbpigmenten vor der schon beschriebenen Waschung mit den Ligandenverbindungen durch Zufügen von NaOH zu der Herstellsuspension bei gleichzeitiger Oxidation beschrieben. Diese Alkalisierung der Herstellslurry hat jedoch den Nachteil, daß viele metallische Verunreinigungen, die sich aus dem Rohstoff noch in der Suspension befinden, noch mit ausgefällt werden, ähnlich wie es bei dem Fällverfahren im alkalischen pH-Bereich der Fall ist. Die daraus durch Glühung hergestellten transparenten, roten Eisenoxidpigmente sind dann ebenfalls mit Fremdmetallen verunreinigt und braunstichig.

Aufgabe war es daher, hochtransparente, rote Eisenoxidpigmente herzustellen, die chemisch rein und damit sehr farbrein sind und die beschriebenen Nachteile der bisher bekannten Pigmente und technischen Verfahren nicht aufweisen.

Es wurde gefunden, daß man auch über Fällverfahren im sauren pH-Bereich, Glühung zu roten Eisenoxidpigmenten und einer Nachbehandlung entweder der gelben Vorprodukte oder der roten Pigmente vergleichsweise sehr gut dispergierbare, hochtransparente rote Eisenoxidpigmente herstellen kann. Diese Pigmente unterscheiden sich von den bisher bekannten transparenten, roten Pigmenten dadurch, daß sie chemisch rein sind.

Gegenstand dieser Erfindung sind auch Verfahren zur Herstellung von transparenten, chemisch reinen, roten Eisenoxidpigmenten, wobei
a) gelbe, transparente Eisenoxidpigmente der α-FeOOH-Modifikation über Fäll- und Oxidationsverfahren im wäßrigen Medium, ausgehend von Eisen(II)sulfatlösungen so hergestellt werden, daß am Ende der Pigmentbildung der pH-Wert unter pH 6, bevorzugt kleiner oder gleich pH 5 liegt, die Suspension filtriert und der Filterkuchen gewischen und gegebenenfalls getrocknet wird,
b) die gelben Pigmentfilterkuchen oder die getrockneten gelben Pigmente zu roten, hochtransparenten Eisenoxidpigmenten geglüht werden und
c) die gelben Vorprodukte und/oder die roten Pigmente einer Natronlaugennachbehandlung unterzogen werden.

Die Herstellung der gelben, hochtransparenten Vorprodukte im sauren Milieu ist bekannt. Sie erfolgt bevorzugt so, daß technische Eisen(II)-sulfatlösung vorgelegt wird, daraus durch Zugabe von alkalischen Fällungsmitteln und gegebenenfalls Keimmodifikatoren Eisen(II)-hydroxide oder -carbonate ausgefällt werden und diese zu Eisen(III)-oxidhydroxiden oxidiert werden. Die Temperatur bei der Fällung sollte möglichst tief gewählt werden, um zu sehr feinteiligen Gelbpigmenten zu gelangen; sie liegt vorzugsweise zwischen 15 °C und 45 °C. Als alkalisches Fällungsmittel wird bevorzugt NaOH eingesetzt. Aber auch andere alkalische Fällungsmittel, wie Na₂CO₃, NH₃, MgO und/oder MgCO₃, können ohne Probleme verwendet werden. Um die Feinteiligkeit der Pigmente zu erhöhen, können zusätzlich Keimmodifikatoren zugesetzt werden. Als Beispiele sind Phosphate, Metaphosphate oder Hydroxycarbonsäuren zu nennen. Die Oxidation des zweiwertigen zum dreiwertigen Eisen erfolgt bevorzugt mit Luft. Dabei ist eine intensive Begasung von Vorteil.

Durch Glühung lassen sich aus den gelben Eisenoxidpigmenten oder -pigmentfilterkuchen rote Eisenoxidpigmente herstellen. Um eine Versinterung der feinen Teilchen zu vermeiden, wird die Glühung vorzugsweise bei Temperaturen zwischen 200 °C und 500 °C und Zeiten zwischen 15 min und 2 h durchgeführt.

Die Natronlaugennachbehandlung kann am gelben Vorprodukt oder am daraus durch Glühung gewonnenen roten Pigment oder am roten und gelben Pigment durchgeführt werden. Bevorzugt erfolgt die Natronlaugennachbehandlung aber am geglühten roten Pigment. Dazu wird das geglühte Produkt in Natronlauge suspendiert. Die Pigmentkonzentration beträgt dabei bevorzugt 10 bis 60 g/l. Die Konzentration der Natronlauge sollte so gewählt werden, daß der pH-Wert der Suspension zwischen pH 10 und pH 14 liegt. In dieser Suspension wird das Pigment solange gerührt, bis sich die salzartigen Verunreinigungen von der Oberfläche gelöst haben. Dazu sind Zeiten zwischen 15 min und 2 h ausreichend. Die Temperatur kann zwischen Raumtemperatur und dem Siedepunkt beliebig gewählt werden. Bevorzugt wird die NaOH-Nachbehandlung aber bei Raumtemperatur durchgeführt. Nach der NaOH-Nachbehandlung wird das Pigment filtriert, gewaschen, getrocknet und gegebenenfalls gemahlen.

Das erhaltene Pigment, welches Gegenstand der Erfindung ist, besteht aus α-Fe₂O₃ mit niedrigem Gehalt an metallischen Verunreinigungen, insbesondere einem niedrigem Mn-Gehalt von kleiner als 0,1 Gew.-% und niedrigem Gehalt an anionischen Verunreinigungen, insbesondere einem niedrigem Sulfatgehalt von kleiner als 1,2 Gew.-%. Lackaufstriche des in einem Lack dispergierten erfindungsgemäßen Pigmentes auf einem Schachbrettmuster zeigen eine hohe Transparenz und einen dunklen, brillanten, roten Farbton. Besonders hervorzuheben ist die deutlich verbesserte Transparenz im Vergleich zum nicht nachbehandelten Pigment. Der besonders dunkle Farbton führt zu einer verbesserten Ergiebigkeit bei der Einfärbung.

Außer Lacken können auch Kunststoffe mit dem Pigment eingefärbt werden. Insbesondere eignen sich die Pigmente wegen ihres geringen Gehaltes an Verunreinigungen zur Einfärbung von Kunststoffen für Lebensmittelverpackungen. Die Verwendung der erfindungsgemäßen Pigmente zur Einfärbung von Lacken und Kunststoffen ist daher ebenfalls Gegenstand der Erfindung.

### Meßmethoden

Zur Bestimmung der Mn-Gehalte werden die Proben vollständig aufgelöst und sodann werden die Mangan-Gehalte emissionsspektrometrisch ermittelt.

Die Bestimmung der Sulfat-Gehalte erfolgt nach folgendem Verfahren: Die Proben werden mit einem Vanadiumpentoxid/Eisenpulver-Gemisch als Zuschlagstoff versetzt und in einem Sauerstoffstrom auf über 1 200 °C aufgeheizt. Die dabei entstehenden Gase werden mit Hilfe einer Infrarot-Meßzelle auf ihren Gehalt an Schwefeldioxid untersucht. Der so ermittelte Gehalt wird in Sulfat umgerechnet.

Die Bestimmung der spezifischen Oberfläche nach BET erfolgt gemäß ISO-Norm 9277.

Die nachfolgenden Beispiele beschreiben die Herstellung der erfindungsgemäßen hochtransparenten, chemisch reinen, roten Eisenoxidpigmente. Die Beispiele sollen der Illustration des Verfahrens dienen und stellen keine Einschränkung dar.

### Beispiele

### Beispiel 1

Zu 57,5 m³ einer Eisensulfatlösung mit einem FeSO₄-Gehalt von 150 g/l wurden bei einer Temperatur von 34 °C unter Rühren 50 kg Weinsäure sowie 6,3 m³ NaOH-Lösung mit einem NaOH-Gehalt von 286 g/l zugefügt. Der pH-Wert direkt im Anschluß an die NaOH-Zugabe lag bei pH 7,4. Anschließend wurde mit 1 050 m³ Luft/h begast, bis der pH-Wert auf pH 3,3 abgefallen war. Die Suspension wurde filtriert, salzfrei gewaschen und das Pigment wurde getrocknet.

50 g des getrockneten Pigmentes wurden in einem Muffelofen unter Begasung mit 100 l Luftlh eine Stunde lang bei 300 °C zu α-Fe₂O₃ geglüht. Das geglühte Pigment hat eine spezifische Oberfläche nach BET von 172 m²/g, einen Sulfatgehalt von 3,55 Gew.-% und einen Mangangehalt von 0,03 Gew.-%.

20 g des geglühten Pigmentes wurden in 400 ml 0,2 n NaOH-Lösung gut dispergiert und eine Stunde bei Raumtemperatur gerührt. Das nachbehandelte Pigment hat eine spezifische Oberfläche nach BET von 166 m²/g, einen Sulfatgehalt von 0,9 Gew.-% und einen Mangangehalt von 0,03 Gew.-%.

Die Analysenwerte sind zur besseren Veranschaulichung der Produkteigenschaften im Vergleich zu den Handelsprodukten Sicotrans L2815 und L2817 (Produkte der Fa. BASF), Cappoxyt 4434 B (Produkt der Fa. Cappelle) und Transoxide red 10-30-AC-1021 (Produkt der Fa. Hilton Davis) in Tabelle 1 zusammengestellt.

### Beispiel 2

694 g Filterpaste des Pigmentes gemäß Beispiel 1 mit einem Feststoffgehalt von 23,4 Gew.-% FeOOH wurden in 5 Liter 0,2 n NaOH resuspendiert. Der FeOOH-Gehalt der Suspension lag bei ca. 30 g/l. Die Suspension wurde eine Stunde bei Raumtemperatur gerührt, abfiltiert, salzfrei gewaschen und das Pigment getrocknet.

50 g des getrockneten Pigmentes wurden in einem Muffelofen unter Begasung mit 100 l Luft/h eine Stunde lang bei 300 °C zu α-Fe₂O₃ geglüht. Das geglühte Pigment hat eine spezifische Oberfläche nach BET von 115 m²/g, einen Sulfatgehalt von 0,64 Gew.-% und einen Mangangehalt von 0,04 Gew.-%. Die Werte sind in Tabelle 1 eingetragen.

### Beispiel 3 (Vergleichsbeispiel)

Über ein alkalisches Fällverfahren mit einem 30 %igen Überschuß an Natronlauge wurde ein hochtransparentes, gelbes Eisenoxidpigment hergestellt. Der pH-Wert am Ende der Oxidation lag bei pH 11,5. 50 g des getrockneten Pigmentes wurden in einem Muffelofen unter Begasung mit 100 l Luft/h eine Stunde lang bei 300 °C zu α-Fe₂O₃ geglüht. Das geglühte Pigment hat eine spezifische Oberfläche nach BET von 107 m²/g, einen Sulfatgehalt von 0,02 Gew.-% und einen Mangangehalt von 0,21 Gew.-%.

20 g des geglühten Pigmentes wurden in 400 ml 0,2 n NaOH-Lösung gut dispergiert und eine Stunde bei Raumtemperatur gerührt. Das nachbehandelte Pigment hat eine spezifische Oberfläche nach BET von 107 m²/g, einen Sulfatgehalt von < 0,01 Gew.-% und einen Mangangehalt von 0,21 Gew.-%. Das heißt, der hohe pH-Wert bei der Herstellung des gelben Vorläuferproduktes führt zu einem hohen Mangangehalt im roten Pigment, der auch durch die Natronlaugennachbehandlung nicht reduziert wird. Die Analysenergebnisse sind zur besseren Übersicht ebenfalls in Tabelle 1 eingetragen.

**Tabelle 1**

| Produkt | sBET (m²/g) | Mn-Gehalt (Gew.-%) | SO₄-Gehalt (Gew.-%) |
|---|---|---|---|
| Sicotrans L 2815 | 124 | 0,04 | 2,6 |
| Sicotrans L 2817 | 103 | 0,20 | 0,8 |
| Cappoxyt Rot 4434 B | 113 | 0,13 | 0,8 |
| Transoxide red | 109 | 0,04 | 4,3 |
| Beispiel 1 | 166 | 0,03 | 0,9 |
| Beispiel 2 | 115 | 0,04 | 0,6 |
| Beispiel 3 = Gegenbeispiel zu 1 | 107 | 0,21 | < 0,01 |

## Patentansprüche

1. Verfahren zur Herstellung von hochtransparenten, chemisch reinen, roten Eisenoxidpigmenten der α-Fe₂O₃-Modifikation, dadurch gekennzeichnet, daß
a) gelbe, hochtransparente Eisenoxidpigmente der α-FeOOH-Modifikation über Fäll- und Oxidationsverfahren im wäßrigen Medium, ausgehend von Eisen(II)sulfatlösung, so hergestellt werden, daß am Ende der Pigmentbildung der pH-Wert unter 6, bevorzugt kleiner oder gleich pH 5 liegt, die Suspension filtriert und der Filterkuchen gewaschen und gegebenenfalls getrocknet wird,
b) die gelben Pigmentfilterkuchen oder die getrockneten gelben Pigmente zu roten, hochtransparenten Eisenoxidpigmenten geglüht werden, wobei
c) die gelben Vorprodukte und/oder die roten Pigmente einer Natronlaugennachbehandlung unterzogen werden.

2. Verfahren gemäß Anspruch 1, dadurch gekennzeichnet, daß die NaOH-Nachbehandlung in einer Suspension mit einem Pigmentgehalt von 10 bis 60 g/l erfolgt.

3. Verfahren gemäß einem der Ansprüche 1 oder 2, dadurch gekennzeichnet, daß der pH-Wert der Suspension bei der NaOH-Nachbehandlung zwischen pH 10 und pH 14 liegt.

4. Verfahren gemäß einem oder mehreren der Ansprüche 1 bis 3, dadurch gekennzeichnet, daß die NaOH-Nachbehandlung bei Temperaturen zwischen 15 °C und 90 °C, bevorzugt bei Raumtemperatur, durchgeführt wird.

5. Verfahren gemäß einem oder mehreren der Ansprüche 1 bis 4, dadurch gekennzeichnet, daß die NaOH-Nachbehandlung durch Rühren durchgeführt wird, wobei die Rührzeit zwischen 15 min und 2 h liegt.

6. Hochtransparente, rote Eisenoxidpigmente der α-Fe₂O₃-Modifikation, dadurch gekennzeichnet, daß sie einen Mn-Gehalt von weniger als 0,10 Gew.-% und einem Sulfatgehalt von weniger als 1,2 Gew.-% aufweisen.

7. Verwendung der roten Eisenoxidpigmente gemäß dem Anspruch 6 zur Einfärbung von Lacken und Kunststoffen.

## Claims

1. Process for the production of highly transparent, chemically pure, red iron oxide pigments of the α-Fe₂O₃ modification, characterised in that
a) yellow, highly transparent iron oxide pigments of the α-FeOOH modification are produced by precipitation and oxidation processes in an aqueous medium, starting from iron(II) sulfate solution, in such a manner that on completion of pigment formation the pH value is below 6, preferably less than or equal to pH 5, the suspension is filtered and the filter cake washed and optionally dried,
b) the yellow pigment filter cakes or the dried yellow pigments are calcined to yield red, highly transparent iron oxide pigments, wherein
c) the yellow intermediates and/or the red pigments are post-treated with sodium hydroxide solution.

2. Process according to claim 1, characterised in that the NaOH post-treatment proceeds in a suspension with a pigment content of 10 to 60 g/l.

3. Process according to one of claims 1 or 2, characterised in that the pH value of the suspension during the NaOH post-treatment is between pH 10 and pH 14.

4. Process according to one or more of claims 1 to 3, characterised in that the NaOH post-treatment is performed at temperatures of between 15°C and 90°C, preferably at room temperature.

5. Process according to one or more of claims 1 to 4, characterised in that the NaOH post-treatment is performed by stirring, wherein the stirring time is between 15 minutes and 2 hours.

6. Highly transparent, red iron oxide pigments of the α-Fe₂O₃ modification, characterised in that they have an Mn content of less than 0.10 wt.% and a sulfate content of less than 1.2 wt.%.

7. Use of the red iron oxide pigments according to claim 6 to colour lacquers and plastics.

## Revendications

1. Procédé pour la préparation d'oxydes de fer pigmentaires rouges, chimiquement purs, à haute transparence, de la forme α-Fe₂O₃, caractérisé en ce que
a) on prépare des oxydes de fer pigmentaires jaunes à haute transparence de la forme α-FeOOH par des procédés de précipitation et d'oxydation en milieu aqueux, au départ d'une solution de sulfate ferreux, dans des conditions telles qu'à la fin de la formation du pigment, le pH soit inférieur à 6, de préférence inférieur ou égal à 5, on filtre la suspension, on lave le gâteau de filtration et le cas échéant on le sèche,
b) on calcine les gâteaux de filtration de pigment jaune ou les pigments jaunes séchés en oxydes de fer pigmentaires rouges à haute transparence,
c) les produits intermédiaires jaunes et/ou les pigments rouges étant soumis à un traitement complémentaire par la lessive de soude.

2. Procédé selon la revendication 1, caractérisé en ce que le traitement complémentaire par NaOH est réalisé dans une suspension à une teneur en pigment de 10 à 60 g/l.

3. Procédé selon l'une des revendications 1 ou 2, caractérisé en ce que le pH de la suspension, lors du traitement complémentaire par NaOH, se situe entre 10 et 14.

4. Procédé selon une ou plusieurs des revendications 1 à 3, caractérisé en ce que le traitement complémentaire par NaOH est réalisé à des températures de 15 à 90°C, de préférence à température ambiante.

5. Procédé selon une ou plusieurs des revendications 1 à 4, caractérisé en ce que le traitement complémentaire par NaOH est réalisé sous agitation, avec des durées d'agitation de 15 min à 2 h.

6. Oxydes de fer pigmentaires rouges à haute transparence de la forme α-Fe₂O₃, caractérisés en ce qu'ils ont une teneur en Mn inférieure à 0,10 % en poids et une teneur en sulfate inférieure à 1,2 % en poids.

7. Utilisation des oxydes de fer pigmentaires rouges selon la revendication 6 pour la coloration de vernis et de résines synthétiques.
